# EUROPEAN PATENT SPECIFICATION

(11) **EP 4 502 029 B1**
(45) Date of publication and mention of the grant of the patent: **21.10.2026**
(21) Application number: 23780450.5
(22) Date of filing: 28.03.2023
(51) Int. Cl.: C08J 9/18, B29C 44/34

(54) **POLYPROPYLENE RESIN FOAM PARTICLES, POLYPROPYLENE RESIN FOAM MOLDED BODY, AND METHOD FOR MANUFACTURING POLYPROPYLENE RESIN FOAM PARTICLES**
POLYPROPYLENHARZSCHAUMPARTIKEL, POLYPROPYLENHARZSCHAUMFORMKÖRPER UND VERFAHREN ZUR HERSTELLUNG VON POLYPROPYLENHARZSCHAUMPARTIKELN
PARTICULES DE MOUSSE DE RÉSINE DE POLYPROPYLÈNE, CORPS MOULÉ EN MOUSSE DE RÉSINE DE POLYPROPYLÈNE ET PROCÉDÉ DE FABRICATION DE PARTICULES DE MOUSSE DE RÉSINE DE POLYPROPYLÈNE

(30) Priority: 29.03.2022 JP 2022053911
(43) Date of publication of application: 05.02.2025
(73) Proprietor: Kaneka Corporation, Osaka-shi, Osaka 530-8288 (JP)
(72) Inventor: MATSUDA, Akana, Settsu-shi, Osaka 566-0072 (JP); KIGUCHI, Taro, Settsu-shi, Osaka 566-0072 (JP)
(74) Representative: Hoffmann Eitle
(86) International application number: PCT/JP2023/012378
(87) International publication number: WO 2023/190441

(56) References cited:
- WO-A1-2016/098698
- JP-A- 2000 154 270
- JP-A- 2000 198 872
- JP-A- 2014 173 012
- JP-A- 2014 173 012
- JP-A- H05 202 221
- US-A- 5 208 265

## Description

### Technical Field

The present invention relates to polypropylene-based resin expanded particles, a polypropylene-based resin expanded molded product, and a method for producing polypropylene-based resin expanded particles.

### Background Art

A polypropylene-based resin expanded molded product is used in various applications such as not only automotive interior materials and automotive bumper core materials but also heat insulating materials, shock-absorbing packing materials, and returnable containers (Patent Literature A method for producing expanded particles from a base resin comprising 81-87 wt.% propylene-based random copolymer and 13-19 wt.-% propylene-based block copolymer at an expansion temperature of 130,5°C and an expansion pressure of 3 MPa is disclosed in Patent Literature 2.

### Citation List

### [Patent Literature]

[Patent Literature 1] Japanese Patent Application Publication Tokukai No. 2014-173012
Patent Literature 2: US 5 208 265 A

### Summary of Invention

### Technical Problem

However, conventional techniques such as that described above are insufficient from the viewpoint of productivity, and therefore have room for further improvement.

An embodiment of the present invention has been made in view of the above problem, and an object thereof is to provide (i) polypropylene-based resin expanded particles excellent in productivity of a polypropylene-based resin expanded molded product and (ii) a polypropylene-based resin expanded molded product obtained by molding the polypropylene-based resin expanded particles.

### Solution to Problem

As a result of diligent research in order to attain the object, the inventors of the present invention arrived at the present invention.

Specifically, polypropylene-based resin expanded particles in accordance with an embodiment of the present invention include the following feature. Polypropylene-based resin expanded particles containing a base resin containing a propylene-based random copolymer and a propylene-based block copolymer, wherein, where X (%) is a content of the propylene-based block copolymer, and Y (MPa) is an expansion pressure during production, X and Y satisfy the following expression (1): $Y < - 0.07 X + 3.6$ (1).

Polypropylene-based resin expanded particles in accordance with another embodiment of the present invention include the following feature.
Polypropylene-based resin expanded particles containing a base resin containing a propylene-based random copolymer and a propylene-based block copolymer, the polypropylene-based resin expanded particles having a peak intensity ratio I₇₂₀/I₈₁₀ of 0.45 to 0.67, and the polypropylene-based resin expanded particles having a shrinkage rate of not more than 20%,
wherein the peak intensity ratio I₇₂₀/I₈₁₀ is a ratio of I₇₂₀ to I₈₁₀, where I₇₂₀ and I₈₁₀ are peak intensities at respective wavelengths of 720 cm⁻¹ and 810 cm⁻¹, the peak intensities being obtained in a spectrum obtained by infrared spectroscopic analysis, and
the shrinkage rate (%) is a value determined by the following expression (2): $Shrinkage rate \left(%\right) = \left(BD-VBD\right) \times 100 / VBD$ (2)
where: BD is a bulk density of the polypropylene-based resin expanded particles, the bulk density being obtained by measurement in a region in which a temperature is 23°C, and a pressure is 0.1 MPa; and VBD is a bulk density of the polypropylene-based resin expanded particles, the bulk density being obtained by measurement in a region in which a temperature is 23°C, and a pressure is -0.09 MPa.

A method for producing polypropylene-based resin expanded particles in accordance with an embodiment of the present invention includes the following feature.
A method for producing polypropylene-based resin expanded particles, including an expansion step of carrying out pressure-release expansion with respect to polypropylene-based resin particles under conditions of an expansion temperature of not more than 163.5°C and an expansion pressure of not more than 2.80 MPa, the polypropylene-based resin particles containing a base resin containing a propylene-based random copolymer and a propylene-based block copolymer, the base resin containing 73% by weight to 95% by weight of the propylene-based random copolymer and 5% by weight to 27% by weight of the propylene-based block copolymer, where a total amount of the propylene-based random copolymer and the propylene-based block copolymer is 100% by weight.

A method for producing polypropylene-based resin expanded particles in accordance with another embodiment of the present invention includes the following feature.
A method for producing polypropylene-based resin expanded particles, including an expansion step of carrying out pressure-release expansion with respect to polypropylene-based resin particles under conditions of an expansion temperature of not more than 163.5°C and an expansion pressure of not more than 2.80 MPa, the polypropylene-based resin particles containing a base resin containing a propylene-based random copolymer and a propylene-based block copolymer.

### Advantageous Effects of Invention

An aspect of the present invention brings about an effect of making it possible to provide (i) polypropylene-based resin expanded particles excellent in productivity of a polypropylene-based resin expanded molded product and (ii) a polypropylene-based resin expanded molded product obtained by molding the polypropylene-based resin expanded particles.

### Description of Embodiments

The following description will discuss an embodiment of the present invention. The present invention is not, however, limited to the embodiments below. The present invention is not limited to configurations described below, but may be altered in various ways by a skilled person within the scope of the claims. The present invention also encompasses, in its technical scope, any embodiment or example derived by combining technical means disclosed in respective differing embodiments and Examples. Further, it is possible to form a new technical feature by combining the technical means disclosed in the respective embodiments. All academic and patent documents cited in the present specification are incorporated herein by reference. Any numerical range expressed as "A to B" in the present specification means "not less than A and not more than B (i.e., a range from A to B which includes both A and B)" unless otherwise stated.

In the present specification, a structural unit derived from an X monomer contained in a polymer, a copolymer, or a resin may be referred to as "X unit".

In the present specification, a copolymer containing, as structural units, an X¹ unit, an X² unit, ... , and an Xⁿ unit (where n is an integer of 2 or more) may be referred to as "X¹/X²/ ... Xⁿ copolymer", unless otherwise stated. The X¹/X²/ ... Xⁿ copolymer is not limited to any particular polymerization form unless otherwise explicitly stated, but may be a random copolymer, an alternating copolymer, a block copolymer, or a graft copolymer.

### [1. Technical idea of an embodiment of the present invention]

As a raw material of a polypropylene-based resin expanded molded product, a propylene-based random copolymer can be commonly used. Meanwhile, there is also a case where a propylene-based block copolymer is used as a raw material of a polypropylene-based resin expanded molded product. Examples of such a case include a case of increasing impact resistance of an in-mold polypropylene-based resin expanded molded product and a case where a recycled resin is used from the viewpoint of reducing an environmental load.

As a recycled resin of a polypropylene-based resin, the propylene-based block copolymer is distributed in a much larger amount than the propylene-based random copolymer.

For the above-described reason, the inventors of the present invention carried out diligent research on using a propylene-based random copolymer and a propylene-based block copolymer in combination to provide polypropylene-based resin expanded particles, which are a raw material of a polypropylene-based resin expanded molded product.

In the course of diligent research, the inventors of the present invention uniquely obtained new knowledge that, in a case where a propylene-based random copolymer and a propylene-based block copolymer are used in combination to produce polypropylene-based resin expanded particles, and resulting polypropylene-based resin expanded particles are used to produce a polypropylene-based resin expanded molded product, the polypropylene-based resin expanded molded product may have poor productivity. For example, in production of a polypropylene-based resin expanded molded product with use of a mold, a resulting polypropylene-based resin expanded molded product may be cooled, before being taken from the mold, so that swelling of the polypropylene-based resin expanded molded product will be reduced after the polypropylene-based resin expanded molded product is taken out from the mold. Such a cooling time greatly contributes to productivity of the polypropylene-based resin expanded molded product. "The polypropylene-based resin expanded molded product may have poor productivity" described earlier is intended to mean a case where the polypropylene-based resin expanded molded product is cooled for a long time.

Thus, the inventors of the present invention carried out further diligent research in order to provide polypropylene-based resin expanded particles excellent in productivity of a polypropylene-based resin expanded molded product even in a case where a propylene-based random copolymer and a propylene-based block copolymer are used in combination.

As a result, the inventors of the present invention uniquely found the following new knowledge and arrived at the present invention. The new knowledge is that polypropylene-based resin expanded particles excellent in productivity of a polypropylene-based resin expanded molded product can be surprisingly provided by using a propylene-based random copolymer and a propylene-based block copolymer at a specific ratio to expand polypropylene-based resin particles so that resulting polypropylene-based resin expanded particles will have a shrinkage rate in a specific range.

### [1. Polypropylene-based resin expanded particles]

Polypropylene-based resin expanded particles in accordance with an embodiment of the present invention containing a base resin containing a propylene-based random copolymer and a propylene-based block copolymer, wherein, where X (%) is a content of the propylene-based block copolymer, and Y (MPa) is an expansion pressure during production, X and Y satisfy the following expression (1):
$Y < - 0.07 X + 3.6$ (1).

Polypropylene-based resin expanded particles in accordance with another embodiment of the present invention containing a base resin containing a propylene-based random copolymer and a propylene-based block copolymer, the polypropylene-based resin expanded particles having a peak intensity ratio I₇₂₀/I₈₁₀ of 0.45 to 0.67, and the polypropylene-based resin expanded particles having a shrinkage rate of not more than 20%, wherein the peak intensity ratio I₇₂₀/I₈₁₀ is a ratio of I₇₂₀ to I₈₁₀, where I₇₂₀ and I₈₁₀ are peak intensities at respective wavelengths of 720 cm⁻¹ and 810 cm⁻¹, the peak intensities being obtained in a spectrum obtained by infrared spectroscopic analysis, and the shrinkage rate (%) is a value determined by the following expression (2): $Shrinkage rate \left(%\right) = \left(BD-VBD\right) \times 100 / VBD$ (2) where: BD is a bulk density of the polypropylene-based resin expanded particles, the bulk density being obtained by measurement in a region in which a temperature is 23°C, and a pressure is 0.1 MPa; and VBD is a bulk density of the polypropylene-based resin expanded particles, the bulk density being obtained by measurement in a region in which a temperature is 23°C, and a pressure is -0.09 MPa.

In the present specification, the "polypropylene-based resin expanded particles" may be referred to as "expanded particles", the "polypropylene-based resin expanded particles in accordance with an embodiment of the present invention" may be referred to as "present expanded particles", and the "polypropylene-based resin expanded molded product" may be referred to as an "expanded molded product".

The present expanded particles have the above-described feature, and thus have an advantage of being excellent in productivity of an expanded molded product. For example, the present expanded particles are advantageous in that using the present expanded particles to carry out in-mold expansion molding with use of a mold allows an expanded molded product in the mold to be cooled for a shorter time. The present expanded particles have the above-described feature, and thus also have an advantage of making it possible to provide an expanded molded product having excellent strength.

### <Component>

### (Base resin)

The base resin contains, as a resin component, at least a propylene-based random copolymer and a propylene-based block copolymer. The base resin can optionally contain, other than the resin component, an additive such as an expansion nucleating agent. It can be said that the base resin is a component which substantially constitutes the present expanded particles. It therefore can be said that a type and an amount of each component contained in the base resin is a type and an amount of each component contained in the present expanded particles.

The propylene-based random copolymer and the propylene-based block copolymer are each a polypropylene-based resin.

In the present specification, the "polypropylene-based resin" is intended to mean a resin that contains a propylene unit in an amount of not less than 50 mol% in 100 mol% of all structural units contained in the resin.

### (Propylene-based random copolymer)

The propylene-based random copolymer contains at least a propylene unit and a structural unit other than the propylene unit. In the present specification, the "structural unit other than the propylene unit" contained in the polypropylene-based resin may also be referred to as a "comonomer unit". In other words, the propylene-based random copolymer contains at least the propylene unit and the comonomer unit.

Examples of such a comonomer(s) include α-olefins having 2 or 4 to 12 carbon atoms, such as ethylene, 1-butene, isobutene, 1-pentene, 3-methyl-1-butene, 1-hexene, 4-methyl- 1-pentene, 3,4-dimethyl-1-butene, 1-heptene, 3-methyl-1-hexene, 1-octene, and 1-decene.

The comonomer unit contained in the propylene-based random copolymer is preferably an ethylene unit from the viewpoint that a molding temperature during in-mold expansion molding of expanded particles can be reduced. In other words, the propylene-based random copolymer is preferably a propylene/ethylene random copolymer containing a propylene unit and an ethylene unit.

The propylene-based random copolymer is not limited to the propylene/ethylene random copolymer. Examples of the propylene-based random copolymer other than the propylene/ethylene random copolymer include a propylene/1-butene random copolymer, a propylene/ethylene/1-butene random copolymer, a propylene/chlorinated vinyl random copolymer, and a propylene/maleic anhydride random copolymer.

The propylene-based random copolymer may be a combination of a propylene/ethylene random copolymer and one or more types of propylene-based random copolymers other than the propylene/ethylene random copolymer.

The propylene-based random copolymer has a melting point that is not particularly limited and that is preferably not less than 130°C, more preferably 130°C to 160°C, even more preferably 135°C to 155°C, and still more preferably 140°C to 150°C. (i) The propylene-based random copolymer that has a melting point of not less than 130°C has an advantage of allowing an expanded molded product obtained from the present expanded particles to have excellent heat resistance, and (ii) the propylene-based random copolymer that has a melting point of not more than 160°C has an advantage of making it easy to increase an expansion rate of expanded particles in production of the present expanded particles.

In the present specification, respective melting points of the propylene-based random copolymer and the propylene-based block copolymer (described later) are values measured and determined by a differential scanning calorimetry (hereinafter referred to as "DSC method"). A specific operational procedure is as described in Examples below. As a differential scanning calorimeter, for example, a differential scanning calorimeter of a DSC7020 type manufactured by Seiko Instruments Inc. can be used.

The propylene-based random copolymer has a melt flow rate (MFR) that is not particularly limited. In the present specification, "MFR of the propylene-based random copolymer" is intended mean the MFR of the propylene-based random copolymer at 230°C. The propylene-based random copolymer has an MFR of 3 g/10 minutes to 30 g/10 minutes, more preferably 4 g/10 minutes to 20 g/10 minutes, and even more preferably 5 g/10 minutes to 18 g/10 minutes. The propylene-based random copolymer that has an MFR in the above range at 230°C has an advantage of making it easy to obtain expanded particles having a relatively high expansion rate. In addition, the propylene-based random copolymer that has an MFR in the above range at 230°C also has an advantage of allowing the present expanded molded product to have excellent surface appearance, and allowing the expanded molded product to have a lower shrinkage rate.

In the present specification, respective MFRs of the propylene-based random copolymer and the propylene-based block copolymer (described later) at 230°C are values measured and determined with use of a melt mass flow rate (hereinafter, MFR) measurement device described in JIS-K7210 and under the following condition: that an orifice has a diameter φ of 2.0959±0.005 mm; the orifice has a length of 8.000±0.025 mm; a load is 2,160 g; and a temperature is 230±0.2°C.

As the propylene-based random copolymer, a propylene-based random copolymer obtained by a known method may be used, or a recycled resin may be used. A non-recycled resin is preferably used because the non-recycled resin stabilizes quality of an expanded molded product.

### (Propylene-based block copolymer)

The propylene-based block copolymer contains at least a propylene unit and a comonomer unit.

The comonomer unit contained in the propylene-based block copolymer is not particularly limited. Specific examples of the comonomer are identical to those described in the foregoing (Propylene-based random copolymer) section, and a description of the specific examples is omitted here.

From the viewpoint of availability, the comonomer unit contained in the propylene-based block copolymer is preferably an ethylene unit. In other words, the propylene-based block copolymer is preferably a propylene/ethylene block copolymer that contains a propylene unit and an ethylene unit. Further, the propylene-based block copolymer is preferably a copolymer (e.g., a propylene/ethylene block copolymer) that contains at least an ethylene block. The propylene-based block copolymer contains a substance that has been regarded as a propylene-based block copolymer in a technical field of a polypropylene-based resin. For example, the propylene/ethylene block copolymer includes homopolypropylene as a matrix and a polyethylene layer as a domain, the polyethylene layer being covered with an elastic ethylene /propylene copolymer. The propylene/ethylene block copolymer may be referred to as an impact copolymer.

The propylene-based block copolymer is not limited to the propylene/ethylene block copolymer. Examples of the propylene-based block copolymer other than the propylene/ethylene block copolymer include a propylene/1-butene block copolymer, a propylene/ethylene/1-butene block copolymer, a propylene/chlorinated vinyl block copolymer, and a propylene/maleic anhydride block copolymer.

The propylene-based block copolymer may be a combination of a propylene/ethylene block copolymer and one or more types of propylene-based block copolymers other than the propylene/ethylene block copolymer.

The propylene-based block copolymer has a melting point that is not particularly limited and that is preferably not less than 160°C, more preferably not less than 162°C, and even more preferably not less than 165°C. The melting point of the propylene-based copolymer has an upper limit that is exemplified by, but not particularly limited to, preferably not more than 180°C, more preferably not more than 175°C, and even more preferably not more than 170°C. (i) The propylene-based block copolymer that has a melting point of not less than 160°C has an effect of having excellent heat resistance, and (ii) the propylene-based block copolymer that has a melting point of not more than 180°C has an effect of having excellent molding processability.

In an embodiment of the present invention, a difference between the melting point of the propylene-based block copolymer and the melting point of the propylene-based random copolymer (i.e., a value (°C) obtained by subtracting the melting point of the propylene-based random copolymer from the melting point of the propylene-based block copolymer) is not particularly limited, and is preferably not more than 30°C, and more preferably not more than 21°C. The above feature is advantageous in that a minimum molding pressure during in-mold molding can be equivalent to a minimum molding pressure of expanded particles obtained by using only the propylene-based random copolymer as the base resin.

The propylene-based block copolymer has an MFR that is not particularly limited. In the present specification, "MFR of the propylene-based block copolymer" is intended mean the MFR of the propylene-based block copolymer at 230°C. The propylene-based block copolymer has an MFR of 3 g/10 minutes to 30 g/10 minutes, more preferably 4 g/10 minutes to 20 g/10 minutes, and even more preferably 5 minutes to 18 minutes. The propylene-based block copolymer that has an MFR in the above range at 230°C has an advantage of making it easy to obtain expanded particles having a relatively high expansion rate, and allowing the present expanded molded product to have excellent surface appearance.

As the propylene-based block copolymer, a propylene-based block copolymer obtained by a known method may be used, and a recycled resin is preferable. As described earlier, as a recycled resin of a polypropylene-based resin, the propylene-based block copolymer is distributed in a much larger amount than the propylene-based random copolymer. The recycled resin of the propylene-based block copolymer is relatively easily available. In a case where the recycled resin is used as all or part of the propylene-based block copolymer, it is possible to not only reduce environmental pollution but also greatly reduce an amount of plastic waste produced and an amount of plastic used for production. Thus, an embodiment in which the recycled resin is used as all or part of the propylene-based block copolymer has an advantage of making it possible to contribute to achievement of Sustainable Development Goals (SDGs).

In the present specification, the "recycled resin" is intended to mean a resin that has undergone a form of a resin product (e.g., expanded particles, an expanded molded product, a film, packaging containers such as a food tray, a bag, and a bottle, sundry goods such as a case for clothes and a plastic file folder, etc.) at least one time and then has been made into a form of a resin (or resin particles) again by means of, for example, melting.

The propylene-based block copolymer may be a mixture of a recycled resin and a non-recycled resin (a resin that has never undergone a form of a resin product). From the viewpoint of reducing an environmental load, a proportion of the recycled resin in 100% by weight of the propylene-based block copolymer is preferably not less than 50%, more preferably not less than 70%, even more preferably not less than 80%, and particularly preferably 100% (i.e., consisting only of the recycled resin).

The base resin (a) preferably contains 73% by weight to 95% by weight of the propylene-based random copolymer and 5% by weight to 27% by weight of the propylene-based block copolymer, (b) more preferably contains 74% by weight to 95% by weight of the propylene-based random copolymer and 5% by weight to 26% by weight of the propylene-based block copolymer, and (c) even more preferably contains 75% by weight to 93% by weight of the propylene-based random copolymer and 7% by weight to 25% by weight of the propylene-based block copolymer, where a total amount of the propylene-based random copolymer and the propylene-based block copolymer is 100% by weight. A case where respective amounts of the propylene-based random copolymer and the propylene-based block copolymer that are contained in the base resin are in the foregoing ranges is advantageous in that expanded particles are more excellent in productivity of a polypropylene-based resin expanded molded product.

### (Another resin, etc.)

The base resin may further contain, as a resin component, a resin other than the propylene-based random copolymer and the propylene-based block copolymer (such a resin may be referred to as another resin, etc.), provided that an effect in accordance with an embodiment of the present invention is not impaired. Examples of the another resin, etc. include: (a) polypropylene-based resins other than the propylene-based random copolymer and the propylene-based block copolymer; (b) ethylene-based resins such as high-density polyethylene, medium-density polyethylene, low-density polyethylene, linear low-density polyethylene, linear very-low-density polyethylene, an ethylene/vinyl acetate copolymer, an ethylene/acrylic acid copolymer, and an ethylene/methacrylic acid copolymer; (c) styrene-based resins such as polystyrene, a styrene/maleic anhydride copolymer, and a styrene/ethylene copolymer; (d) polyolefin-based waxes such as propylene-α-olefin-based wax; and (e) olefin-based rubbers such as ethylene/propylene rubber, ethylene/butene rubber, ethylene/hexene rubber, and ethylene/octene rubber. The another resin is contained in the present expanded particles in an amount of preferably not more than 10 parts by weight, and more preferably not more than 5 parts by weight, with respect to 100 parts by weight of the base resin.

### (Additive)

The base resin may optionally further contain an additive other than the above-described propylene-based random copolymer and the above-described propylene-based block copolymer. Examples of the additive include a coloring agent, a water absorbing substance, an expansion nucleating agent, an antistatic agent, a flame retarder, an antioxidant, a photo stabilizer, a crystal nucleating agent, an electrically conductive agent, and a lubricant. Such an additive may be directly added to a blended product (described later) or to a polypropylene-based resin composition in production of polypropylene-based resin particles.

### <Physical properties>

The following description will discuss physical properties of the present expanded particles.

### (Peak intensity ratio)

The present expanded particles have a peak intensity ratio I₇₂₀/I₈₁₀ of preferably 0.45 to 0.67. The peak intensity ratio I₇₂₀/I₈₁₀ is a ratio of I₇₂₀ to I₈₁₀, where "I₇₂₀" and "I₈₁₀" are peak intensities at respective wavelengths of 720 cm⁻¹ and 810 cm⁻¹ in a spectrum obtained by infrared spectroscopic analysis. Infrared spectroscopic analysis can be carried out by a method described in Examples below. A peak at a wavelength of 720 cm⁻¹ can be a peak derived mainly from an ethylene block, and a peak at a wavelength of 810 cm⁻¹ can be a peak derived mainly from propylene. A higher peak at a wavelength of 720 nm⁻¹ in expanded particles is intended to mean that the expanded particles contain more ethylene blocks.

Thus, the peak intensity ratio I₇₂₀/I₈₁₀ obtained by infrared spectroscopic analysis can relatively accurately reflect a ratio between propylene and an ethylene block that are contained in the base resin contained in the expanded particles. Specifically, in a case where the propylene-based block copolymer contains an ethylene block as a preferable aspect, a greater value of the peak intensity ratio I₇₂₀/I₈₁₀ is intended mean a larger amount of the propylene-based block copolymer in a total amount of the propylene-based random copolymer and the propylene-based block copolymer. In an embodiment, by measuring, in advance, a peak intensity ratio of the propylene-based block copolymer used to produce the base resin, it is possible to determine a ratio between the propylene-based random copolymer and the propylene-based block copolymer that are contained in the base resin.

The peak intensity ratio is 0.45 to 0.67, more preferably 0.45 to 0.65, more preferably 0.47 to 0.63, even more preferably 0.49 to 0.61, and still more preferably 0.50 to 0.60. The above feature is advantageous in that expanded particles are more excellent in productivity of a polypropylene-based resin expanded molded product.

The peak intensity ratio can be controlled by respective amounts of the block copolymers contained in the present expanded particles.

### (Shrinkage rate)

A shrinkage rate of the present expanded particles is determined by the following expression (2): $Shrinkage rate = \left(BD-VBD\right) \times 100 / VBD$ (2) where BD is a bulk density of polypropylene-based resin expanded particles at 23°C and 0.1 MPa (absolute pressure). In other words, BD can be said to be a bulk density of polypropylene-based resin expanded particles under standard atmospheric pressure. VBD is a bulk density of polypropylene-based resin expanded particles at 23°C and - 0.09 MPa (gage pressure) or less. In other words, VBD is a bulk density of polypropylene-based resin expanded particles under reduced pressure.

The shrinkage rate is not more than 20%, more preferably not more than 18%, and even more preferably not more than 16%. The shrinkage rate may have a lower limit that is exemplified by, but not particularly limited to, not less than 0%. A case where the shrinkage rate is in the foregoing range is advantageous in that expanded particles are more excellent in productivity of a polypropylene-based resin expanded molded product.

The shrinkage rate can be controlled by adjusting conditions (e.g., an expansion temperature and an expansion pressure) during production of expanded particles.

### (DSC ratio of expanded particles)

The present expanded particles preferably have at least two melting peaks in a DSC curve obtained in differential scanning calorimetry (described later). Among the melting peaks, a melting heat quantity determined from a melting peak on a high temperature-side is regarded as "high temperature-side melting heat quantity", and a melting heat quantity determined from a melting peak on a low temperature-side is regarded as "low temperature-side melting heat quantity". Further, in a case where there are three or more melting peaks, a melting heat quantity determined from a melting peak at the highest temperature is regarded as "high temperature-side melting heat quantity", and a melting heat quantity determined from melting peaks other than the melting peak at the highest temperature is regarded as "low temperature-side melting heat quantity".

The present expanded particles have a DSC ratio that is not particularly limited and that is preferably 10.0% to 50.0%, more preferably 15.0% to 40.0%, and even more preferably 18.0% to 30.0%. The expanded particles that have a DSC ratio of not less than 10.0% have an advantage of making it possible to provide an expanded molded product which has a sufficient strength. In contrast, the expanded particles that have a DSC ratio of not more than 50.0% have an advantage of making it possible to provide an expanded molded product by molding the expanded particles at a relatively low temperature (molding temperature).

In the present specification, the DSC ratio is intended to mean a ratio of the high temperature-side melting heat quantity to a total melting heat quantity, the ratio being calculated from a DSC curve of the present expanded particles. In the present specification, the DSC curve is obtained by using a differential scanning calorimeter (e.g., a differential scanning calorimeter of a DSC7020 type manufactured by Hitachi High-Tech Science Corporation). More specifically, the DSC ratio can be measured by a method described in Examples.

The DSC ratio of the present expanded particles is also a value serving as an indicator of an amount of crystals contained in the expanded particles and having a high melting point. That is, the DSC ratio which is 10.0% to 50.0% indicates that the expanded particles contain a relatively large amount of crystals having a high melting point. Further, the DSC ratio of the expanded particles is greatly involved in viscoelasticity of resin particles and the expanded particles during expansion of the resin particles and during swelling of the expanded particles. That is, in a case where the expanded particles have a DSC ratio of 10.0% to 50.0%, the resin particles and the expanded particles can exhibit excellent expandability and excellent swellability, respectively, during expansion of the resin particles and during molding of the expanded particles. As a result, the expanded particles have an advantage of making it possible to obtain, with a low molding pressure, an expanded molded product that has excellent internal fusibility and that has excellent mechanical strength such as compressive strength.

Examples of a method for controlling the DSC ratio in a predetermined range in the present expanded particles include a method for adjusting conditions during production of the present expanded particles (in particular, an expansion temperature, an expansion pressure, a maintaining time, a temperature in a region (space) into which a dispersion slurry is released, and the like). The method for controlling the DSC ratio in the predetermined range is preferably a method for adjusting the expansion temperature, the expansion pressure, and/or the maintaining time. This is because the expansion temperature, the expansion pressure, and/or the maintaining time is/are easy to adjust.

For example, a higher expansion temperature tends to result in a lower DSC ratio. On the contrary, a lower expansion temperature tends to result in a higher DSC ratio. This is because the expansion temperature changes an amount of unmelted crystals. Further, a higher expansion pressure tends to result in a lower DSC ratio. On the contrary, a lower expansion pressure tends to result in a higher DSC ratio. This is because the expansion pressure changes a degree of plasticization, and such a change in degree of plasticization changes the amount of the unmelted crystals. Furthermore, a longer maintaining time tends to result in a higher DSC ratio. This is because the maintaining time changes an amount of growth of the unmelted crystals.

### (Expansion rate of expanded particles)

The present expanded particles have an expansion rate of preferably 15 times to 50 times, more preferably 18 times to 40 times, and even more preferably 20 times to 25 times. (i) The expanded particles that have an expansion rate of not less than 15 times make it possible to obtain a light-weight expanded molded product with high production efficiency, and (ii) the expanded particles that have an expansion rate of not more than 50 times cause no fear that a resulting expanded molded product may have an insufficient strength. The expansion rate can be measured by a method described in Examples below.

### (Minimum molding pressure)

The present expanded particles are advantageous in that using the present expanded particles makes it possible to obtain, with a low molding pressure, an expanded molded product having an excellent rate of fusion (e.g., a rate of fusion of not less than 80%). In other words, the present expanded particles have an advantage of making it possible to provide, with a molding pressure equivalent to a molding pressure of expanded particles obtained by using only the propylene-based random copolymer as the base resin, an expanded molded product that has an excellent rate of fusion.

In the present specification, a minimum value among molding pressures with which an expanded molded product having an excellent rate of fusion (e.g., having a rate of fusion of not less than 80%) can be provided in production of an expanded molded product with use of expanded particles is also referred to as "minimum molding pressure". The minimum molding pressure can be measured by a method described in Examples below. The present expanded particles also have an advantage of having a low minimum molding pressure. In other words, the minimum molding pressure of the present expanded particles can be equivalent to a minimum molding pressure of expanded particles obtained by using only the propylene-based random copolymer as the base resin.

The present expanded particles have a minimum molding pressure that is exemplified by, but not particularly limited to, preferably not more than 0.30 MPa, more preferably not more than 0.28 MPa, and even more preferably not more than 0.26 MPa. The minimum molding pressure may have a lower limit that is exemplified by, but not particularly limited to, 0.15 MPa or more. The present expanded particles that have a minimum molding pressure in the foregoing range have an advantage of making it possible to provide an expanded molded product with a small economic burden.

### [2. Method for producing polypropylene-based resin expanded particles]

A method for producing polypropylene-based resin expanded particles in accordance with an embodiment of the present invention includes an expansion step of carrying out pressure-release expansion with respect to polypropylene-based resin particles under conditions of an expansion temperature of not more than 163.5°C and an expansion pressure of not more than 2.80 MPa, the polypropylene-based resin particles containing a base resin containing a propylene-based random copolymer and a propylene-based block copolymer.

A method for producing polypropylene-based resin expanded particles in accordance with another embodiment of the present invention includes an expansion step of carrying out pressure-release expansion with respect to polypropylene-based resin particles under conditions of an expansion temperature of not more than 163.5°C and an expansion pressure of not more than 2.80 MPa, the polypropylene-based resin particles containing a base resin containing a propylene-based random copolymer and a propylene-based block copolymer, the base resin containing 73% by weight to 95% by weight of the propylene-based random copolymer and 5% by weight to 27% by weight of the propylene-based block copolymer, where a total amount of the propylene-based random copolymer and the propylene-based block copolymer is 100% by weight.

### (Granulation step)

The present production method may further contain a step (granulation step) of producing polypropylene-based resin particles containing a base resin containing a propylene-based random copolymer and a propylene-based block copolymer. In the present specification, "polypropylene-based resin particles" may be referred to as "resin particles".

Examples of a method for producing resin particles include a method using an extruder. Specifically, resin particles can be produced by, for example, by a method of the following (1) to (5): (1) a blended product is produced by blending at least one selected from the group consisting of a block copolymer, a random copolymer, and, as necessary, another resin and an additive; (2) the blended product is introduced into an extruder, and the blended product is melted and kneaded so as to prepare a polypropylene-based resin composition; (3) the polypropylene-based resin composition is extruded from a die provided in the extruder; (4) the extruded polypropylene-based resin composition is cooled by, for example, passing the polypropylene-based resin composition through water, so as to solidify the polypropylene-based resin composition; and (5) subsequently, with use of a cutter, the solidified polypropylene-based resin composition is finely cut into a desired shape such as a cylindrical shape, an elliptical shape, a spherical shape, a cuboid shape, a rectangular parallelepiped shape, a hollow tubular shape, a polygonal columnar shape, or the like. Alternatively, in (3), the polypropylene-based resin composition that has been melted and kneaded may be extruded directly into water from the die provided in the extruder, and, immediately after being extruded, may be cut into particles, cooled, and solidified. Melting and kneading a blended product in this manner makes it possible to obtain more uniform resin particles.

Resin particles obtained as described above have a weight per particle of preferably 0.2 mg/particle to 10.0 mg/particle, and more preferably 0.5 mg/ particle to 6.0 mg/particle. (A) The resin particles that have a weight per particle of not less than 0.2 mg/particle tend to improve handleability of the resin particles, and tend to reduce a shrinkage rate of an expanded molded product obtained by molding resulting expanded particles. (B) The resin particles that have a weight per particle of not more than 10.0 mg/particle tend to improve a mold filling property in an in-mold expansion molding step.

### (Dispersion step)

The present production method can further include, before the expansion step, a dispersion step of dispersing, in a vessel, a base resin containing a propylene-based random copolymer and a propylene-based block copolymer, an aqueous dispersion medium, a blowing agent, and, as necessary, a dispersing agent and/or a dispersion auxiliary agent. It can be said that the dispersion step is a step of preparing a dispersion slurry in which a base resin and a blowing agent, and, as necessary, a dispersing agent and/or a dispersion auxiliary agent are dispersed in an aqueous dispersion medium. The base resin in the dispersion step may be the resin particles obtained in the above-described granulation step.

The vessel is not limited to any particular one, and is preferably a vessel which can withstand the expansion temperature described later and the expansion pressure described later. The vessel is, for example, preferably a pressure-resistant vessel, and more preferably an autoclave-type pressure-resistant vessel. The vessel may also be provided with a stirrer therein.

The aqueous dispersion medium is not limited to any particular one, provided that the aqueous dispersion medium allows the resin particles, the blowing agent, and the like to be uniformly dispersed.

Examples of the aqueous dispersion medium include (a) dispersion media obtained by adding methanol, ethanol, ethylene glycol, glycerin, and the like to water, (b) water such as ultrapure water, pure water, tap water, and industrial water, and (c) a solution (aqueous solution) containing a salt such as sodium chloride or sodium sulfate.

Preferable examples of the aqueous dispersion medium include: pure water such as RO water (water purified by a reverse osmosis membrane method), distilled water, and deionized water (water purified by an ion exchange resin); and ultrapure water. This is because such aqueous dispersion media make it possible to stably produce expanded particles.

Examples of the blowing agent include (a) inorganic blowing agents such as (a-1) inorganic gas such as nitrogen, carbon dioxide, air (a mixture of oxygen, nitrogen, and carbon dioxide) and (a-2) water and (b) organic blowing agents such as (b-1) saturated hydrocarbons having 3 to 5 carbon atoms, such as propane, normal butane, isobutane, normal pentane, isopentane, and neopentane, (b-2) ethers such as dimethyl ether, diethyl ether, and methyl ethyl ether, and (b-3) halogenated hydrocarbons such as monochloromethane, chloroethane, and hydrofluoroolefin.

As the blowing agent, at least one type selected from the group consisting of the above-listed inorganic blowing agents and the above-listed organic blowing agents can be used. In a case where two or more types of blowing agents are used in mixture, a mixing ratio can be adjusted as appropriate according to a purpose. From the viewpoint of an environmental load and expandability, the inorganic blowing agents are preferable among the above-listed blowing agents. The blowing agent is preferably carbon dioxide among the inorganic blowing agents because carbon dioxide has a moderately high plasticizing effect and makes it easy to improve expandability of expanded particles in production of the present expanded particles.

One type of the above-listed aqueous dispersion media may be used alone, or two or more types thereof may be used in combination, and one type of the above-listed blowing agents may be used alone, or two or more types thereof may be used in combination.

In the method for producing the present expanded particles, it is preferable to use the dispersing agent (e.g., inorganic substances such as tricalcium phosphate, kaolin, and talc) and the dispersion auxiliary agent (e.g., anionic surfactants such as sodium alkane sulfonate and sodium dodecylbenzene sulfonate). The above feature makes it possible to reduce agglomeration (which may hereinafter be referred to as blocking) of resin particles, and to improve stability of the dispersion slurry in the vessel. This brings about an advantage of making it possible to stably produce expanded particles.

### (Expansion step)

A specific aspect of the expansion step is not particularly limited. The expansion step may include, for example, (i) a temperature-increasing and pressure-increasing step of carrying out pressure-release expansion with respect to resin particles by increasing an internal temperature of a vessel to a certain temperature and increasing an internal pressure of the vessel to a certain pressure,
(b) a maintaining step of maintaining the internal temperature and the internal pressure of the vessel at the certain temperature and the certain pressure, and
(c) a releasing step of releasing one end of the vessel so as to release a dispersion slurry inside the vessel into a region (space) having a pressure lower than an expansion pressure (i.e., the internal pressure of the vessel).

### (Temperature-increasing and pressure-increasing step and maintaining step)

The temperature-increasing and pressure-increasing step is preferably carried out after the dispersion step, and the maintaining step is preferably carried out after the temperature-increasing and pressure-increasing step.

The expansion temperature is not more than 163.5°C, preferably not more than 163.3°C, and even more preferably not more than 163.2°C. A lower limit of the expansion temperature is not particularly limited, provided that it is possible to carry out pressure-release expansion with respect to the resin particles. The lower limit may be, for example, not less than 150°C.

The expansion pressure is not more than 2.80 MPa, preferably not more than 2.75 MPa, more preferably not more than 2.70 MPa, and even more preferably not more than 2.60 MPa. A lower limit of the expansion pressure is not particularly limited, provided that it is possible to carry out pressure-release expansion with respect to the resin particles. The lower limit may be, for example, not less than 1.5 MPa.

In the course of diligent research, the inventor of the present invention uniquely obtained new knowledge that, in order to obtain expanded particles having a low shrinkage rate, it is preferable to appropriately set an expansion pressure depending on an amount of a propylene-based block copolymer. Specifically, the inventor of the present invention uniquely obtained new knowledge that, in order to obtain expanded particles having a low shrinkage rate, a lower expansion pressure is preferably set in the case of a larger amount of a propylene-based block copolymer. More specifically, the inventor of the present invention uniquely obtained new knowledge that, an expansion pressure Y (MPa) during production of expanded particles preferably satisfies the following expression (1) where X (wt%) is a content of a propylene-based block copolymer in 100% by weight of a total amount of a propylene-based random copolymer and the propylene-based block copolymer in polypropylene-based resin particles. $Y < - 0.07 X + 3.6$ (1). A reason why the above expression (1) is preferably satisfied is unclear. However, it is inferred that the reason is that the propylene-based block copolymer has a property of being softer and smoother as compared with the propylene-based random copolymer. An embodiment of the present invention is not limited to such inference.

X and Y more preferably satisfy the following expression (3), even more preferably satisfy the following expression (4), and particularly preferably satisfy the following expression (5): $Y < - 0.07 X + 3.55$ (3) $Y < - 0.07 X + 3.5$ (4) $Y < - 0.07 X + 3.45$ (5).

In the maintaining step, a period of time (maintaining time) for which the dispersion slurry in the vessel is maintained at around the expansion temperature and around the expansion pressure is not particularly limited. The maintaining time is preferably 10 minutes to 60 minutes, more preferably 12 minutes to 55 minutes, and even more preferably 15 minutes to 50 minutes. The maintaining time that is not less than 10 minutes allows an amount of unmelted crystals (polypropylene-based resin crystals) in resin particles to be a sufficient amount in a process of expansion from the resin particles to expanded particles. As a result, it is possible to obtain expanded particles having a low open cell ratio, and to reduce shrinkage of resulting expanded particles. In contrast, the maintaining time that is not more than 60 minutes prevents an amount of unmelted crystals in resin particles from being excessive in a process of expansion from the resin particles to expanded particles. Thus, resulting expanded particles make it possible to provide an expanded molded product by molding the expanded particles at a relatively low temperature (molding temperature).

### (Releasing step)

(a) In a case where the maintaining step is not carried out, the releasing step is preferably carried out after the temperature-increasing and pressure-increasing step. (b) In a case where the maintaining step is carried out, the releasing step is preferably carried out after the maintaining step. The releasing step makes it possible to expand resin particles, and as a result, expanded particles are obtained.

In the releasing step, a "region having a pressure lower than the expansion pressure" is intended to mean a "region under a pressure lower than the expansion pressure" or a "space under a pressure lower than the expansion pressure", and can also be described as "in an atmosphere having a pressure lower than the expansion pressure". The region having a pressure lower than the expansion pressure is not particularly limited, provided that the pressure is lower than the expansion pressure. The region having a pressure lower than the expansion pressure may be, for example, a region under atmospheric pressure.

In a case where, in the releasing step, the dispersion slurry is released into a region having a pressure lower than the expansion pressure, it is also possible to release the dispersion slurry through an open orifice measuring 1 mm to 5 mm in diameter for the purpose of, for example, adjusting a flow rate of the dispersion slurry and reducing variation in expansion rate of resulting expanded particles. The above low-pressure region (space) may be filled with saturated steam for the purpose of improving expandability.

Note that a process for producing expanded particles from resin particles as described above will be referred to as a "first-step expansion process," and the expanded particles thus obtained will be referred to as "first-step expanded particles".

### (Second-step expansion process)

In order to obtain expanded particles having a high expansion rate, the first-step expanded particles obtained in the first-step expansion process may be expanded again. A process for increasing an expansion rate of the first-step expanded particles is referred to as a "second-step expansion process", and polyolefin-based resin expanded particles obtained through the second-step expansion process are referred to as "second-step expanded particles". A specific method of the second-step expansion process is not particularly limited, and a known method can be employed.

### [3. Polypropylene-based resin expanded molded product]

A polypropylene-based resin expanded molded product in accordance with an embodiment of the present invention is an expanded molded product obtained by expansion molding of the polypropylene-based resin expanded particles disclosed in the [1. Polypropylene-based resin expanded particles] section. A polypropylene-based resin expanded molded product in accordance with an embodiment of the present invention may be an expanded molded product obtained by expansion molding of the polypropylene-based resin expanded particles obtained by the production method disclosed in the [2. Method for producing polypropylene-based resin expanded particles] section. A polypropylene-based resin expanded molded product in accordance with an embodiment of the present invention can be said to contain the polypropylene-based resin expanded particles disclosed in the [1. Polypropylene-based resin expanded particles] section, or the polypropylene-based resin expanded particles obtained by the production method disclosed in the [2. Method for producing polypropylene-based resin expanded particles] section.

In the present specification, the "polypropylene-based resin expanded molded product in accordance with an embodiment of the present invention" may be referred to as the "present expanded molded product".

The present expanded molded product has the above-described feature, and thus has an advantage of having excellent productivity and excellent strength.

### (Productivity)

In the present specification, productivity of the present expanded molded product is evaluated by a period of time (seconds) (molding cycle) from a start of molding of the present expanded particles until completion of molding. Note that a time point at which the present expanded particles were filled in a mold was regarded as a time point of the start of molding, as described in Examples below. Further, a molded product was cooled (cooled with water), and the mold was opened at a timing at which a surface pressure meter attached to a surface of a plank mold indicated that a surface pressure had decreased to 0.01 MPa. This timing was regarded as a time point of completion of mold release. A shorter molding cycle is intended to mean that an expanded molded product has excellent productivity.

### (Surface appearance)

In the present specification, surface appearance of the present expanded molded product is evaluated by an extent of a gap between expanded particles (hereinafter such a gap may be referred to as "inter-particle dimple") on a surface of the expanded molded product, and a wrinkle on the surface of the expanded molded product. A smaller inter-particle dimple present on the surface of the expanded molded product or a smaller number of inter-particle dimples present on the surface of the expanded molded product is intended to mean that the expanded molded product has excellent surface appearance. Further, a smaller number of wrinkles present on the surface of the expanded molded product is intended to mean that the expanded molded product has excellent surface appearance.

### (Static compressive strength)

The present expanded molded product also has an advantage of having excellent strength. In the present specification, strength of an expanded molded product is evaluated by static compressive strength. A method for measuring the static compressive strength of the expanded molded product will be described in detail in Examples below.

The present expanded molded product has a static compressive strength that is preferably not less than 0.212 MPa, more preferably not less than 0.217 MPa, and even more preferably not less than 0.229 MPa. The static compressive strength may have an upper limit that is exemplified by, but not particularly limited to, 0.300 MPa. The above feature is advantageous in that the present expanded molded product can withstand being used when used in various applications such as not only automotive interior materials and automotive bumper core materials but also heat insulating materials, shock-absorbing packing materials, and returnable containers.

### Examples

The following description will further specifically discuss an embodiment of the present invention with reference to Examples and Comparative Examples. However, the present invention is not limited only to such Examples.-[0141]

### [Materials]

In Examples and Comparative Examples, the following materials were used without carrying out, in particular, purification, etc.

### <Polypropylene-based resin>

· Propylene/ethylene block copolymer 1 [having an MFR of 12 g/10 min, having a melting point of 166°C, being a recycled resin, and containing 5% by weight of carbon black]
Propylene/ethylene block copolymer 2 [J715M manufactured by Prime Polymer Co., Ltd., having an MFR of 9 min, having a melting point of 165°C, and being a recycled resin]
· Propylene/ethylene block copolymer 3 [having an MFR of 29 min, having a melting point of 165°C, and being a recycled resin]
· Propylene/ethylene random copolymer [having an MFR of 7 min, having a melting point of 145°C, and being a non-recycled resin]

### <Resin particle additive>

· Talc [Talcan Powder PK-S manufactured by Hayashi-Kasei Co., Ltd.]
· Glycerin [PURIFIED GLYCERIN D manufactured by Lion Corporation]

### [Measurement method]

An evaluation method carried out in Examples and Comparative Examples will be described below.

### <Measurement of melting point of polypropylene-based resin>

A differential scanning calorimeter [DSC7020 manufactured by Hitachi High-Tech Science Corporation] was used to measure a melting point of polypropylene-based resin particles. A specific measurement method is as follows: (1) a temperature of 5 mg to 6 mg of a sample to be measured was increased from 40°C to 220°C at a temperature increase rate of 10°C/min so that the sample was melted; (2) thereafter, the temperature was decreased from 220°C to 40°C at a temperature decrease rate of 10°C/min so that the sample was crystallized; and (3) further, the temperature was increased from 40°C to 220°C at a temperature increase rate of 10°C/min. The temperature at a peak (melting peak) in a DSC curve obtained in the second temperature increase (i.e., in (3)) was regarded as the melting point of the polypropylene-based resin particles.

### <Measurement of MFR of polypropylene-based resin>

A melt mass flow rate (hereinafter, MFR) measurement device described in JIS-K7210 was used to measure an MFR of the polypropylene-based resin under the following condition: that an orifice had a diameter φ of 2.0959±0.005 mm; the orifice had a length of 8.000±0.025 mm; a load was 2,160 g; and a temperature was 230±0.2°C.

### <Measurement of DSC ratio of polypropylene-based resin expanded particles>

A differential scanning calorimeter (DSC7020 manufactured by Hitachi High-Tech Science Corporation) was used to measure a DSC ratio. Specifically, the DSC ratio was determined by the following equation where Q₁ and Qₕ are a low temperature-side melting peak area and a high temperature-side melting peak area, respectively, of a DSC curve during the first temperature increase which DSC curve is obtained during an increase in temperature of 5 mg to 6 mg of the polypropylene-based resin expanded particles from 40°C to 220°C at a temperature increase rate of 10°C/min.$DSC ratio \left(%\right) = {Q}_{h} / \left({Q}_{1}+{Q}_{h}\right) \times 100$

Note that, strictly, Q₁ was an area enclosed by (i) a low temperature-side melting peak and (ii) a tangent extending from a local maximum between the low temperature-side melting peak and a high temperature-side melting peak to a baseline at which melting starts, and Qₕ was a high temperature-side melting peak heat quantity that is a heat quantity enclosed by (i) the high temperature-side melting peak and (ii) a tangent extending from the local maximum between the low temperature-side melting peak and the high temperature-side melting peak to a baseline at which the melting ends.

### <Infrared spectroscopic analysis of polypropylene-based resin expanded particles>

A ratio of peak intensities derived from propylene and block ethylene was determined by infrared spectroscopic analysis of the polypropylene-based resin expanded particles. Measurement was carried out by an attenuated total reflection method (hereinafter referred to as "ATR method"). After the polypropylene-based resin expanded particles were crushed while being sandwiched between metal plates, measurement was carried out under a resolution of 4 cm⁻¹ and the number of scans of 16 in a state in which the crushed polypropylene-based resin expanded particles were pressure-bonded to crystal of an ATR measurement device (Spectrum Two manufactured by The Perkin-Elmer Corp.), so that spectra were obtained. In so doing, pressure application during the pressure bonding was adjusted so that a peak intensity at 1,376 cm⁻¹ was 0.15 A. Subsequently, a peak intensity (I₈₁₀) at a wavelength of 810 cm⁻¹ and a peak intensity (I₇₂₀) at a wavelength of 720 cm⁻¹ were read from the obtained spectrum, and a peak intensity ratio was calculated from [(I₇₂₀)/(I₈₁₀)]. In the present Examples, the peak intensity at a wavelength of 810 cm⁻¹ was a peak intensity derived from CH₃ of propylene, and a peak intensity at a wavelength of 720 cm⁻¹ was a peak intensity derived from an ethylene chain. Note that five arbitrary polypropylene-based resin expanded particles were used to carry out measurement, and an arithmetic mean value thereof was used. Note also that, in Comparative Example 3, expanded particles were unable to be obtained as described later, and thus resin particles were used to carry out measurement as in the case of expanded particles. In a case where measurement conditions are identical, little difference in measurement result for a ratio of peak intensities is expected to occur between a case where expanded particles are used as a sample and a case where resin particles are used as a sample.

### <Measurement of expansion rate of polypropylene-based resin expanded particles>

Approximately not less than 3 g and not more than 10 g of polypropylene-based resin expanded particles were measured out and dried at 60°C for 6 hours. Subsequently, the polypropylene-based resin expanded particles were subjected to conditioning in a room at 23°C and a humidity of 50%, and then a weight w₁ (g) of the polypropylene-based resin expanded particles was measured. Thereafter, the polypropylene-based resin expanded particles were submerged in a graduated cylinder containing ethanol, and a volume v (cm³) of the polypropylene-based resin expanded particles was measured by an increase in water level in the graduated cylinder (a submersion method), and an absolute specific gravity ρ_{b}=w₁/v of the polypropylene-based resin expanded particles was calculated. Further, an expansion rate of the polypropylene-based resin expanded particles was calculated as a ratio of a density ρᵣ of polypropylene-based resin particles that had not been expanded to the absolute specific gravity ρ_{b} (ρᵣ/ρ_{b}). Note that, in each of Examples and Comparative Examples below, the polypropylene-based resin particles that had not been expanded (polypropylene-based resin particles) had a density ρᵣ of 0.9 g/cm³.

### <Measurement of shrinkage rate of polypropylene-based resin expanded particles>

A shrinkage rate of the polypropylene-based resin expanded particles was calculated by the following method from a bulk density (hereinafter, BD) and a bulk density of the polypropylene-based resin expanded particles under reduced pressure (hereinafter, VBD). A weight of the polypropylene-based resin expanded particles to be subjected to measurement was regarded as W₁, and a volume V₁ of the polypropylene-based resin expanded particles was determined with use of a graduated cylinder at 23°C under atmospheric pressure (standard atmospheric pressure of 0.1 MPa). The bulk density BD of the polypropylene-based resin expanded particles at 23°C and 0.1 MPa (under standard atmospheric pressure) was determined in accordance with the following equation: $BD \left(g/L\right) = {W}_{1} / {V}_{1}$

The polypropylene-based resin expanded particles were measured out again, a weight thereof was regarded as W₂. The polypropylene-based resin expanded particles were placed in a pressure-resistant graduated vessel, and an internal pressure of the pressure-resistant vessel was reduced by a vacuum pump or the like. After it was confirmed by a pressure gauge that an inside of the pressure-resistant vessel had reached a state of reduced pressure of not more than -0.09 MPa (gage pressure), a vibrator was used to vibrate the pressure-resistant vessel until there was no change in scale in an upper part of the expanded particles. Thereafter, a value on the scale in the upper part of the polypropylene-based resin expanded particles in the pressure-resistant vessel was read, and the value was regarded as a volume V₂. During pressure reduction, the expanded particles that are pushed together may hinder a change in volume. Thus, by, for example, laying down the pressure-resistant vessel, the change in volume was prevented from being hindered by the expanded particles, so that the pressure was gradually reduced. The bulk density VBD of the polypropylene-based resin expanded particles at 23°C and under reduced pressure of -0.09 MPa (gage pressure) was determined in accordance with the following equation: $VBD \left(g/L\right) = {W}_{2} / {V}_{2}$

Further, the shrinkage rate of the polypropylene-based resin expanded particles was determined by the following expression:$\left(BD-VBD\right) / VBD \times 100 .$

### <Measurement of minimum molding pressure of polypropylene-based resin in-mold expanded molded product>

An in-mold expanded molded product to be subjected to each evaluation was obtained by carrying out molding while changing a set steam pressure in the present heating step in [Production of polypropylene-based resin in-mold expanded molded product] (described later) in a range from 0.20 MPa to 0.32 MPa (gage pressure) in 0.01 MPa increments. A crack having a depth of approximately 5 mm was made in a surface of the obtained in-mold expanded molded product with use of a knife. The in-mold expanded molded product was split along the crack, and a fracture surface was observed. A ratio of the number of destroyed particles observed on the fracture surface to the number of all particles observed on the fracture surface was determined, and a rate of fusion of a molded product was evaluated. A minimum steam pressure at which the rate of fusion reached not less than 80% was regarded as the minimum molding pressure.

### <Molding cycle of polypropylene-based resin in-mold expanded molded product>

A molding cycle in a method for producing a polypropylene-based resin in-mold expanded molded product was regarded as a period from a start of molding to an end of molding at which end a molded product is released from a mold. A time point at which filling of the polypropylene-based resin expanded particles into a mold started was regarded as the start of molding. The polypropylene-based resin expanded particles were heated by feeding steam into the mold. Next, a molded product was cooled with water, and the mold was opened at a timing at which a surface pressure meter attached to a surface of a plank mold indicated that a surface pressure had decreased to 0.01 MPa. A time point of completion of mold release was regarded as the end of molding. A heating pressure of the steam was evaluated as the minimum molding pressure determined in the above-described <Minimum molding pressure of polypropylene-based resin in-mold expanded molded product>. Evaluation criteria for productivity are as follows.
VE (very excellent): The molding cycle is not more than 180 seconds.
E (excellent): The molding cycle is more than 180 seconds and not more than 210 seconds.
P (poor): The molding cycle is not less than 210 seconds.

### <Surface appearance of polypropylene-based resin in-mold expanded molded product>

A resulting polypropylene-based resin in-mold expanded molded product measuring 350 mm in length and 450 mm in width was visually observed, and surface appearance was determined by the following criteria. An inter-particle dimple (gap between polypropylene-based resin expanded particles), which is one of evaluation indexes for a surface property, was determined by visually counting the number of inter-particle dimples present in a 50 mm × 50 mm square in a central part of a surface of a molded product. E (excellent surface appearance): There is no wrinkle, and there is zero to one inter-particle dimple.
G (good surface appearance): There is no wrinkle, and there are two to three inter-particle dimples.
A (acceptable surface appearance): A wrinkle is observed, or there are four to five inter-particle dimples.
U (unacceptable surface appearance): A wrinkle is observed, or there are six or more inter-particle dimples.

### <Measurement of static compressive strength of polypropylene-based resin in-mold expanded molded product>

A test piece measuring 50 mm in length, 50 mm in width, and 25 mm in thickness was cut out from a polypropylene-based resin in-mold expanded molded product. A tension and compression testing machine (TG series manufactured by MinebeaMitsumi Inc.) was used to measure a compressive stress at a time when the test piece was compressed by 50% at a rate of 10 mm/min. The compressive stress at the time when the test piece was compressed by 50% is a criterion for rigidity of an in-mold expanded molded product.

The following description will discuss a method for producing polypropylene-based resin particles, polypropylene-based resin expanded particles, and a polypropylene-based resin in-mold expanded molded product in Examples and Comparative Examples.

### (Example 1)

### [Method for producing polypropylene-based resin particles]

89.75 parts by weight of an ethylene/propylene random copolymer, 10 parts by weight of an ethylene/propylene block copolymer, 0.2 parts by weight of glycerin, and 0.05 parts by weight of talc were measured out and dry-blended with use of a blender. A twin-screw extruder (TEM26-SX manufactured by Toshiba Machine Co., Ltd.) was used to melt and knead the dry-blended mixture at a resin temperature of 220°C, and an extruded strand was cooled with water in a 2 m length water tank and then cut, so that polypropylene-based resin particles (1.2 mg/particle) were produced.

### [Production of polypropylene-based resin expanded particles]

Into a pressure-resistant autoclave having a capacity of 10 L, 100 parts by weight (2.4 kg) of the polypropylene-based resin particles obtained as described above, 200 parts by weight of water, 0.3 parts by weight of kaolin (ASP170 manufactured by BASF) as an poorly water-soluble inorganic compound, and 0.06 parts by weight of sodium dodecylbenzene sulfonate (NEOPELEX G-15 manufactured by Kao Corporation) as a surfactant were introduced, and then 4 parts by weight of carbon dioxide as a blowing agent was added under stirring. The contents of the autoclave were heated to an expansion temperature of 158.2°C and maintained for 10 minutes. Then, carbon dioxide was additionally impregnated so as to increase an internal pressure of the autoclave to an expansion pressure of 2.60 MPa. An inside of the autoclave was maintained at the above expansion temperature and the above expansion pressure for 20 minutes, and then a valve in a lower part of the autoclave was opened. Through an open orifice measuring 3.6 mm in diameter, the contents of the autoclave were released under atmospheric pressure, so that polypropylene-based resin expanded particles having an expansion rate of 24 times were obtained. In this case, during the release, in order to prevent a reduction in internal pressure of the vessel, carbon dioxide was impregnated so that the internal pressure of the vessel was maintained.

### [Production of polypropylene-based resin in-mold expanded molded product]

The polypropylene-based resin expanded particles thus obtained were dried at 75°C. The dried polypropylene-based resin expanded particles were introduced into a pressure-resistant vessel and impregnated with pressurized air. Polypropylene-based resin expanded particles, which had been adjusted in advance to have an internal-expanded particle pressure of 0.20 MPa (absolute pressure), were filled in a mold measuring 370 mm in length, 320 mm in width, and 50 mm in thickness. Thereafter, an inside of a mold chamber was heated with steam at a predetermined pressure so that expanded particles were fused together. An inside of the mold and a surface of a molded product were cooled with water, and then the molded product was taken out, so that a polypropylene-based resin in-mold expanded molded product was obtained. This operation was carried out by changing the pressure of the steam from 0.20 MPa (gage pressure) to 0.32 MPa in 0.01 MPa increments, and a minimum pressure necessary for the polypropylene-based resin expanded particles to be sufficiently fused was determined and regarded as a minimum molding pressure. A resulting in-mold expanded molded product was left to stand at 23°C for 2 hours and then cured at 75°C for 13 hours.

### (Examples 2 to 7, Comparative Examples 1 to 3, and Reference Example 1)

Polypropylene-based resin particles, polypropylene-based resin expanded particles, and polypropylene-based resin in-mold expanded molded products were produced by an operation similar to the operation in Example 1, except that resin formulation was changed in [Production of polypropylene-based resin particles] as shown in Table 1 and that an expansion condition was changed in [Production of polypropylene-based resin expanded particles] as shown in Table 1. Note that the expansion step was not carried out in Comparative Example 3. In accordance with results of Examples, as an expansion temperature for obtaining expanded particles having a suitable quality, 158°C was selected in a case where the ethylene/propylene block copolymer was contained in an amount of 10 parts by weight in 100 parts by weight of a resin component, and 164°C was selected in a case where the ethylene/propylene block copolymer was contained in an amount of 20 parts by weight in 100 parts by weight of the resin component. Thus, in the case of Comparative Example 3, in which the ethylene/propylene block copolymer was contained in an amount of 30 parts by weight in 100 parts by weight of the resin component, the expansion temperature for obtaining expanded particles having a suitable quality was expected to exceed an upper limit temperature to which temperature was able to be increased by the pressure-resistant autoclave used in Examples. The expansion step was therefore not carried out in Comparative Example 3. Table 1 shows resin formulation conditions, expansion conditions, and results of evaluation of resulting polypropylene-based resin expanded particles and resulting polypropylene-based resin in-mold expanded molded products.

**[Table 1]**

| | | | Example 1 | Example 2 | Example 3 | Example 4 |
|---|---|---|---|---|---|---|
| Resin component | Ethylene/propylene random copolymer | wt% | 89.75 | 89.75 | 89.75 | 79.75 |
| | Ethylene/propylene block copolymer 1 (X) | wt% | 10 | 10 | 10 | 20 |
| | Ethylene/propylene block copolymer 2 (X) | wt% | 0 | 0 | 0 | 0 |
| | Ethylene/propylene block copolymer 3 (X) | wt% | 0 | 0 | 0 | 0 |
| Peak intensity ratio (I₇₂₀/I₈₁₀) | | | 0.51 | 0.52 | 0.51 | 0.60 |
| Expansion condition | Expansion temperature | °C | 158.2 | 158.2 | 158.5 | 163.2 |
| | Expansion pressure (Y) | Mpa | 2.60 | 2.40 | 2.20 | 2.01 |
| Right side of expression (1) | | - | 2.90 | 2.90 | 2.90 | 2.20 |
| Quality of expanded particles | DSC ratio | % | 20.4 | 23.0 | 21.9 | 26.8 |
| | Expansion rate | Time | 24 | 24 | 24 | 24 |
| | Shrinkage rate of expanded particles | % | 16 | 13 | 12 | 14 |
| Minimum molding pressure | | Mpa | 0.26 | 0.26 | 0.26 | 0.26 |
| Productivity | | - | E | E | E | E |
| Surface appearance | | - | G | G | G | G |
| Static compressive strength | | Mpa | 0.239 | 0.233 | 0.223 | 0.220 |

| | | | Example 5 | Example 6 | Example 7 | |
|---|---|---|---|---|---|---|
| Resin component | Ethylene/propylene random copolymer | wt% | 74.75 | 74.75 | 74.75 | |
| | Ethylene/propylene block copolymer 1 (X) | wt% | 25 | 0 | 0 | |
| | Ethylene/propylene block copolymer 2 (X) | wt% | 0 | 25 | 0 | |
| | Ethylene/propylene block copolymer 3 (X) | wt% | 0 | 0 | 25 | |
| Peak intensity ratio (I₇₂₀/I₈₁₀) | | | 0.65 | 0.64 | 0.64 | |
| Expansion condition | Expansion temperature | °C | 163.0 | 163.0 | 163.0 | |
| | Expansion pressure (Y) | Mpa | 1.80 | 1.80 | 1.80 | |
| Right side of expression (1) | | - | 1.85 | 1.85 | 1.85 | |
| Quality of expanded particles | DSC ratio | % | 30.0 | 30.0 | 30.0 | |
| | Expansion rate | Time | 24 | 24 | 24 | |
| | Shrinkage rate of expanded particles | % | 15 | 15 | 15 | |
| Minimum molding pressure | | Mpa | 0.26 | 0.26 | 0.26 | |
| Productivity | | - | E | E | E | |
| Surface appearance | | - | G | G | G | |
| Static compressive strength | | Mpa | 0.221 | 0.220 | 0.221 | |

| | | | Comp. Ex.1 | Comp. Ex.2 | Comp. Ex.3 | Ref. Ex. 1 |
|---|---|---|---|---|---|---|
| Resin component | Ethylene/propylene random copolymer | wt% | 89.75 | 79.75 | 69.75 | 99.75 |
| | Ethylene/propylene block copolymer 1 (X) | wt% | 10 | 20 | 30 | 0 |
| | Ethylene/propylene block copolymer 2 (X) | wt% | 0 | 0 | 0 | 0 |
| | Ethylene/propylene block copolymer 3 (X) | wt% | 0 | 0 | 0 | 0 |
| Peak intensity ratio (I₇₂₀/I₈₁₀) | | | 0.65 | 0.65 | 0.7 | 0 |
| Expansion condition | Expansion temperature | °C | 158.0 | 163.7 | - | 150.7 |
| | Expansion pressure (Y) | Mpa | 2.90 | 2.20 | - | 2.91 |
| Right side of expression (1) | | - | 2.90 | 2.20 | - | - |
| Quality of expanded particles | DSC ratio | % | 22.0 | 24.5 | - | 22.6 |
| | Expansion rate | Time | 24 | 24 | - | 24 |
| | Shrinkage rate of expanded particles | % | 22 | 26 | - | 3 |
| Minimum molding pressure | | Mpa | 0.26 | 0.26 | - | 0.26 |
| Productivity | | - | P | P | - | VE |
| Surface appearance | | - | G | G | - | E |
| Static compressive strength | | Mpa | 0.211 | 0.209 | - | 0.241 |

| | | | | | | |
|---|---|---|---|---|---|---|
| "Comp. Ex." is an abbreviation for "Comparative Example", and "Ref. Ex." is an abbreviation for "Reference Example". | | | | | | |

In a case where a peak intensity ratio determined by infrared spectroscopic analysis is not less than 0.45, a propylene-based block copolymer is sufficiently contained. This improves recyclability in a case where a recycled polypropylene-based resin is used as the propylene-based block copolymer. In contrast, it is understood from Table 1 that, in a case where the peak intensity ratio is 0.7, a molding processing temperature reaches a high temperature, so that expanded particles are unable to be obtained, or productivity deteriorates. It is also understood that, in Comparative Example 1, in which expansion was carried out at 2.90 MPa, which is an expansion pressure substantially equal to the expansion pressure in Reference Example 1, not only a molding cycle became longer and productivity deteriorated, but also a static compressive strength of an in-mold expanded molded product was greatly reduced. Further, also in Comparative Example 2, in which an expansion temperature was set to 163.7°C, a molding cycle similarly became longer, and a static compressive strength of an in-mold expanded molded product was similarly greatly reduced.

In contrast, in a case where the expansion condition is adjusted as in Examples 1 to 7 so that the polypropylene-based resin expanded particles have a shrinkage rate of not more than 20%, a molding cycle is longer than the molding cycle in Reference Example 1, but can be sufficiently shortened, and a reduction in static compressive strength also tends to be prevented or reduced. Further, polypropylene-based resin expanded particles containing an ethylene/propylene block copolymer can be subjected to in-mold molding at a molding pressure equal to a pressure at which polypropylene-based resin expanded particles consisting only of an ethylene/propylene random copolymer are molded, and a resulting in-mold expanded molded product has excellent surface appearance.

### Industrial Applicability

In accordance with an embodiment of the present invention, a molding time during in-mold molding is short. This makes it possible to provide polypropylene-based resin expanded particles having improved productivity. Thus, an embodiment of the present invention can be used in various applications such as not only automotive interior materials and automotive bumper core materials but also heat insulating materials, shock-absorbing packing materials, and returnable containers.

## Claims

1. A method for producing polypropylene-based resin expanded particles, comprising an expansion step of carrying out pressure-release expansion with respect to polypropylene-based resin particles under conditions of an expansion temperature of not more than 163.5°C and an expansion pressure of not more than 2.80 MPa, the polypropylene-based resin particles containing a base resin containing a propylene-based random copolymer and a propylene-based block copolymer, the base resin containing 73% by weight to 95% by weight of the propylene-based random copolymer and 5% by weight to 27% by weight of the propylene-based block copolymer, where a total amount of the propylene-based random copolymer and the propylene-based block copolymer is 100% by weight.

2. The method as set forth in claim 1, wherein the method satisfies the following expression (1): $Y < - 0.07 X + 3.6$ (1) where:
X is a content (% by weight) of the propylene-based block copolymer in the base resin where the total amount of the propylene-based random copolymer and the propylene-based block copolymer is 100% by weight; and
Y is the expansion pressure (MPa) in the expansion step.

3. The method as set forth in claim 1 or 2, wherein the expansion temperature is not less than 150°C.

4. Polypropylene-based resin expanded particles comprising a base resin containing a propylene-based random copolymer and a propylene-based block copolymer,
the polypropylene-based resin expanded particles having a peak intensity ratio I₇₂₀/I₈₁₀ of 0.45 to 0.67, the peak intensity ratio being measured as defined in the description, and
the polypropylene-based resin expanded particles having a shrinkage rate of not more than 20%,
wherein the peak intensity ratio I₇₂₀/I₈₁₀ is a ratio of I₇₂₀ to I₈₁₀, where I₇₂₀ and I₈₁₀ are peak intensities at respective wavelengths of 720 cm⁻¹ and 810 cm⁻¹, the peak intensities being obtained in a spectrum obtained by infrared spectroscopic analysis, and
the shrinkage rate (%) is a value determined by the following expression (2): $Shrinkage rate \left(%\right) = \left(BD-VBD\right) \times 100 / VBD$ (2)
where:
BD is a bulk density of the polypropylene-based resin expanded particles, the bulk density being obtained by measurement in a region in which a temperature is 23°C, and a pressure is 0.1 MPa; and
VBD is a bulk density of the polypropylene-based resin expanded particles, the bulk density being obtained by measurement in a region in which a temperature is 23°C, and a pressure is -0.09 MPa, the bulk density being measured as defined in the description.

5. The polypropylene-based resin expanded particles as set forth in claim 4, wherein the base resin contains 73% by weight to 95% by weight of the propylene-based random copolymer and 5% by weight to 27% by weight of the propylene-based block copolymer, where a total amount of the propylene-based random copolymer and the propylene-based block copolymer is 100% by weight.

6. The polypropylene-based resin expanded particles as set forth in claim 4 or 5, wherein the propylene-based block copolymer has a melting point of not less than 160°C and not more than 180°C, the melting point being measured as defined in the description.

7. The polypropylene-based resin expanded particles as set forth in any one of claims 4 to 6, wherein the propylene-based block copolymer is a recycled resin.

8. The polypropylene-based resin expanded particles as set forth in any one of claims 4 to 7, wherein the propylene-based random copolymer contains a propylene unit in an amount of not less than 50 mol% in 100 mol% of all structural units, and the propylene-based block copolymer contains a propylene unit in an amount of not less than 50 mol% in 100 mol% of all structural units.

9. The polypropylene-based resin expanded particles as set forth in any one of claims 4 to 8, wherein the propylene-based random copolymer contains a propylene/ethylene random copolymer containing a propylene unit and an ethylene unit.

10. The polypropylene-based resin expanded particles as set forth in any one of claims 4 to 9, wherein the propylene-based random copolymer has a melt flow rate of 3 g/10 minutes to 30 g/10 minutes at 230°C, the melt flow rate being measured as defined in the description.

11. The polypropylene-based resin expanded particles as set forth in any one of claims 4 to 10, wherein a difference between a melting point of the propylene-based block copolymer and a melting point of the propylene-based random copolymer is not more than 30°C, the melting point being measured as defined in the description.

12. The polypropylene-based resin expanded particles as set forth in any one of claims 4 to 11, wherein the propylene-based block copolymer has a melt flow rate of 3 g/10 minutes to 30 g/10 minutes at 230°C, the melt flow rate being measured as defined in the description.

13. The polypropylene-based resin expanded particles as set forth in any one of claims 4 to 12, wherein the polypropylene-based resin expanded particles have a DSC ratio of 10.0% to 50.0%, the DSC ratio being measured as defined in the description.

14. The polypropylene-based resin expanded particles as set forth in any one of claims 4 to 13, wherein the polypropylene-based resin expanded particles have an expansion rate of 15 times to 50 times, the expansion rate being measured as defined in the description.

15. A polypropylene-based resin expanded molded product obtained by expansion molding of polypropylene-based resin expanded particles recited in any one of claims 4 to 14.

## Patentansprüche

1. Verfahren zur Herstellung von expandierten Harzpartikeln auf Polypropylenbasis, umfassend einen Expansionsschritt zum Durchführen einer Druckentspannungsexpansion bei Harzpartikeln auf Polypropylenbasis unter Bedingungen einer Expansionstemperatur von nicht höher als 163,5°C und einem Expansionsdruck von nicht mehr als 2,80 MPa, wobei die Harzpartikeln auf Polypropylenbasis ein Basisharz umfassen, das ein statistisches Copolymer auf Propylenbasis und ein Block-Copolymer auf Propylenbasis umfasst, wobei das Basisharz 73 Gew.-% bis 95 Gew.-% des statistischen Copolymers auf Propylenbasis und 5 Gew.-% bis 27 Gew.-% des Block-Copolymers auf Propylenbasis umfasst, worin die Gesamtmenge des statistischen Copolymers auf Propylenbasis und des Block-Copolymers auf Propylenbasis 100 Gew.-% beträgt.

2. Verfahren gemäß Anspruch 1, worin das Verfahren den folgenden Ausdruck (1) erfüllt: $Y < - 0 , 07 X + 3,6$ (1) worin
X der Gehalt (Gew.-%) des Block-Copolymers auf Propylenbasis in dem Basisharz bezeichnet, worin die Gesamtmenge des statistischen Copolymers auf Propylenbasis und des Block-Copolymers auf Propylenbasis 100 Gew.-% beträgt; und
Y der Expansionsdruck (MPa) im Expansionsschritt ist.

3. Verfahren gemäß Anspruch 1 oder 2, worin die Expansionstemperatur nicht niedriger als 150°C ist.

4. Expandierte Harzpartikel auf Polypropylenbasis, umfassend ein Basisharz, das ein statistisches Copolymer auf Propylenbasis und ein Block-Copolymer auf Propylenbasis umfasst,
worin die expandierten Harzpartikel auf Polypropylenbasis ein Peak-Intensitätsverhältnis I₇₂₀/I₈₁₀ von 0,45 bis 0,67 aufweisen, worin das Peak-Intensitätsverhältnis wie in der Beschreibung definiert gemessen wird, und
worin die expandierten Harzpartikel auf Polypropylenbasis eine Schrumpfrate von nicht größer als 20 % aufweisen,
worin das Peak-Intensitätsverhältnis I₇₂₀/I₈₁₀ ein Verhältnis von I₇₂₀ zu I₈₁₀ ist, worin I₇₂₀ und I₈₁₀ die Peak-Intensitäten bei den jeweiligen Wellenzahlen von 720 cm⁻¹ und 810 cm⁻¹ sind, wobei die Peak-Intensitäten in einem Spektrum erhalten werden, das durch Infrarotspektroskopieanalyse erhalten wird und
worin die Schrumpfrate (%) ein Wert ist, der durch den folgenden Ausdruck (2) bestimmt ist: $Schrumpfrate \left(%\right) = \left(BD-VBD\right) \times 100 / VBD$ (2)
worin
BD die Schüttdichte der expandierten Harzpartikel auf Polypropylenbasis sind, worin die Schüttdichte durch Messung in einem Bereich erhalten wird, worin die Temperatur 23°C ist und der Druck 0,1 MPa ist; und
VBD die Schüttdichte der expandierten Harzpartikel auf Polypropylenbasis ist, worin die Schüttdichte erhalten wird durch Messung in einem Bereich, worin die Temperatur 23°C ist und der Druck -0,09 MPa beträgt, worin die Schüttdichte wie in der Beschreibung beschrieben gemessen wird.

5. Expandierte Harzpartikel auf Polypropylenbasis gemäß Anspruch 4, worin das Basisharz 73 Gew.-% bis 95 Gew.-% des statistischen Copolymers auf Propylenbasis und 5 Gew.-% bis 27 Gew.-% des Block-Copolymers auf Propylenbasis umfasst, worin die Gesamtmenge des statistischen Copolymers auf Propylenbasis und des Block-Copolymers auf Propylenbasis 100 Gew.-% beträgt.

6. Expandierter Harzpartikel auf Polypropylenbasis gemäß Anspruch 4 oder 5, worin das Block-Copolymer auf Propylenbasis einen Schmelzpunkt von nicht niedriger als 160°C und nicht höher als 180°C aufweist, worin der Schmelzpunkt wie in der Beschreibung definiert gemessen wird.

7. Expandierte Harzpartikel auf Polypropylenbasis gemäß irgendeinem der Ansprüche 4 bis 6, worin das Block-Copolymer auf Propylenbasis ein recyceltes Harz ist.

8. Expandierte Harzpartikel auf Polypropylenbasis gemäß irgendeinem der Ansprüche 4 bis 7, worin das statistische Copolymer auf Propylenbasis eine Propyleneinheit in einer Menge von nicht weniger als 50 mol-% in 100 mol-% aller Struktureinheiten umfasst und worin das Block-Copolymer auf Propylenbasis eine Propyleneinheit in einer Menge von nicht weniger als 50 mol-% in 100 mol-% von allen Struktureinheiten umfasst.

9. Expandierte Harzpartikel auf Polypropylenbasis gemäß irgendeinem der Ansprüche 4 bis 8, worin das statistische Copolymer auf Propylenbasis ein statistisches Propylen/Ethylen-Copolymer enthält, das eine Propyleneinheit und eine Ethyleneinheit enthält.

10. Expandierte Harzpartikel auf Polypropylenbasis gemäß irgendeinem der Ansprüche 4 bis 9, worin das statistische Copolymer auf Propylenbasis eine Schmelzflussrate von 3 g/10 Minuten bis 30 g/10 Minuten bei 230°C aufweist, worin die Schmelzflussrate wie in der Beschreibung definiert gemessen wird.

11. Expandierte Harzpartikel auf Polypropylenbasis gemäß irgendeinem der Ansprüche 4 bis 10, worin die Differenz zwischen dem Schmelzpunkt des Block-Copolymers auf Propylenbasis und dem Schmelzpunkt des statistischen Copolymers auf Propylenbasis nicht mehr als 30°C beträgt, worin der Schmelzpunkt wie in der Beschreibung definiert gemessen wird.

12. Expandierte Harzpartikel auf Polypropylenbasis gemäß irgendeinem der Ansprüche 4 bis 11, worin das Block-Copolymer auf Propylenbasis eine Schmelzflussrate von 3 g/10 Minuten bis 30 g/10 Minuten bei 230°C aufweist, wobei die Schmelzflussrate wie in der Beschreibung definiert gemessen wird.

13. Expandierte Harzpartikel auf Polypropylenbasis gemäß irgendeinem der Ansprüche 4 bis 12, worin die expandierten Harzpartikel auf Polypropylenbasis ein DSC-Verhältnis von 10,0 % bis 50,0 % aufweisen, wobei das DSC-Verhältnis wie in der Beschreibung definiert gemessen wird.

14. Expandierte Harzpartikel auf Polypropylenbasis gemäß irgendeinem der Ansprüche 4 bis 13, worin die expandierten Harzpartikel auf Polypropylenbasis ein Expansionsverhältnis von 15-fach bis 50-fach aufweist, worin das Expansionsverhältnis wie in der Beschreibung definiert gemessen wird.

15. Formprodukt auf Basis eines expandierten Harzes auf Polypropylenbasis, erhalten durch Expansionsformen der expandierten Harzpartikel auf Polypropylenbasis, wie sie in irgendeinem der Ansprüche 4 bis 14 definiert sind.

## Revendications

1. Procédé de production de particules expansées de résine à base de polypropylène, comprenant une étape d'expansion consistant à réaliser une expansion par détente à l'égard de particules de résine à base de polypropylène dans des conditions d'une température d'expansion inférieure ou égale à 163,5 °C et d'une pression d'expansion inférieure ou égale à 2,80 MPa, les particules de résine à base de polypropylène contenant une résine de base contenant un copolymère aléatoire à base de propylène et un copolymère séquencé à base de propylène, la résine de base contenant 73 % en poids à 95 % en poids du copolymère aléatoire à base de propylène et 5 % en poids à 27 % en poids du copolymère séquencé à base de propylène, où la quantité totale du copolymère aléatoire à base de propylène et du copolymère séquencé à base de propylène est de 100 % en poids.

2. Procédé selon la revendication 1, dans lequel le procédé satisfait à l'expression suivante (1) : $Y < - 0 , 07 X + 3,6$ (1) où :
X est une teneur (% en poids) du copolymère séquencé à base de propylène dans la résine de base où la quantité totale du copolymère aléatoire à base de propylène et du copolymère séquencé à base de propylène est de 100 % en poids ; et
Y est la pression d'expansion (MPa) dans l'étape d'expansion.

3. Procédé selon la revendication 1 ou la revendication 2, dans lequel la température d'expansion est supérieure ou égale à 150 °C.

4. Particules expansées de résine à base de polypropylène comprenant une résine de base contenant un copolymère aléatoire à base de propylène et un copolymère séquencé à base de propylène,
les particules expansées de résine à base de polypropylène présentant un rapport d'intensité de pic I₇₂₀/I₈₁₀ de 0,45 à 0,67, le rapport d'intensité de pic étant mesuré tel que défini dans la description, et
les particules expansées de résine à base de polypropylène présentant un taux de retrait inférieur ou égal à 20 %,
dans lesquelles le rapport d'intensité de pic I₇₂₀/I₈₁₀ est un rapport de I₇₂₀ à I₈₁₀, où I₇₂₀ et I₈₁₀ sont des intensités de pic à des longueurs d'onde respectives de 720 cm⁻¹ et 810 cm⁻¹, les intensités de pic étant obtenues dans un spectre obtenu par analyse spectroscopique infrarouge, et
le taux de retrait (%) est une valeur déterminée par l'expression (2) suivante : $Taux de retrait \left(%\right) = \left(BD-VBD\right) \times 100 / VBD$ (2) où :
BD est une masse volumique apparente des particules expansées de résine à base de polypropylène, la masse volumique apparente étant obtenue par mesure dans une région dans laquelle une température est de 23 °C et une pression est de 0,1 MPa ; et
VBD est une masse volumique apparente des particules expansées de résine à base de polypropylène, la masse volumique apparente étant obtenue par mesure dans une région dans laquelle une température est de 23 °C et une pression est de -0,09 MPa, la masse volumique apparente étant mesurée telle que définie dans la description.

5. Particules expansées de résine à base de polypropylène selon la revendication 4, dans lesquelles la résine de base contient de 73 % en poids à 95 % en poids du copolymère aléatoire à base de propylène et de 5 % en poids à 27 % en poids du copolymère séquencé à base de propylène, où la quantité totale du copolymère aléatoire à base de propylène et du copolymère séquencé à base de propylène est de 100 % en poids.

6. Particules expansées de résine à base de polypropylène selon la revendication 4 ou 5, dans lesquelles le copolymère séquencé à base de propylène présente un point de fusion supérieur ou égal à 160 °C et inférieur ou égal à 180 °C, le point de fusion étant mesuré tel que défini dans la description.

7. Particules expansées de résine à base de polypropylène selon l'une quelconque des revendications 4 à 6, dans lesquelles le copolymère séquencé à base de propylène est une résine recyclée.

8. Particules expansées de résine à base de polypropylène selon l'une quelconque des revendications 4 à 7, dans lesquelles le copolymère aléatoire à base de propylène contient un motif propylène en une quantité supérieure ou égale à 50 % en moles dans 100 % en moles de tous les motifs structuraux, et le copolymère séquencé à base de propylène contient un motif propylène en une quantité supérieure ou égale à 50 % en moles dans 100 % en moles de tous les motifs structuraux.

9. Particules expansées de résine à base de polypropylène selon l'une quelconque des revendications 4 à 8, dans lesquelles le copolymère aléatoire à base de propylène contient un copolymère aléatoire propylène/éthylène contenant un motif propylène et un motif éthylène.

10. Particules expansées de résine à base de polypropylène selon l'une quelconque des revendications 4 à 9, dans lesquelles le copolymère aléatoire à base de propylène présente un indice de fluidité à l'état fondu de 3 g/10 minutes à 30 g/10 minutes à 230 °C, l'indice de fluidité à l'état fondu étant mesuré tel que défini dans la description.

11. Particules expansées de résine à base de polypropylène selon l'une quelconque des revendications 4 à 10, dans lesquelles une différence entre un point de fusion du copolymère séquencé à base de propylène et un point de fusion du copolymère aléatoire à base de propylène est inférieure ou égale à 30 °C, le point de fusion étant mesuré tel que défini dans la description.

12. Particules expansées de résine à base de polypropylène selon l'une quelconque des revendications 4 à 11, dans lesquelles le copolymère séquencé à base de propylène présente un indice de fluidité à l'état fondu de 3 g/10 minutes à 30 g/10 minutes à 230 °C, l'indice de fluidité à l'état fondu étant mesuré tel que défini dans la description.

13. Particules expansées de résine à base de polypropylène selon l'une quelconque des revendications 4 à 12, dans lesquelles les particules expansées de résine à base de polypropylène présentent un rapport DSC de 10,0 % à 50,0 %, le rapport DSC étant mesuré tel que défini dans la description.

14. Particules expansées de résine à base de polypropylène selon l'une quelconque des revendications 4 à 13, dans lesquelles les particules expansées de résine à base de polypropylène présentent un taux d'expansion de 15 fois à 50 fois, le taux d'expansion étant mesuré tel que défini dans la description.

15. Produit moulé expansé de résine à base de polypropylène obtenu par moulage par expansion de particules expansées de résine à base de polypropylène énoncées dans l'une quelconque des revendications 4 à 14.
